# EUROPEAN PATENT APPLICATION

(11) **EP 4 487 994 A1**
(43) Date of publication of application: **08.01.2025**
(21) Application number: 22930868.9
(22) Date of filing: 10.03.2022
(51) Int. Cl.: B23Q 11/10, B23B 29/12, B23B 31/107, B23Q 3/12

(54) **TOOL HOLDING FIXTURE AND TOOL HOLDING DEVICE**

(71) Applicant: NT Tool Corporation, Takahama City Aichi 444-1386 (JP)
(72) Inventor: ISHIKAWA, Hitoshi, 1710 Aichi (JP)
(74) Representative: Kramer Barske Schmidtchen Patentanwälte PartG mbB
(86) International application number: PCT/JP2022/010709
(87) International publication number: WO 2023/170887

(57) **Abstract**

[Problem] To provide a technique that can change a protruding length of a tool while maintaining coolant supply characteristics for the tool.

[Solution] A tool 700, which is inserted into a body part interior space (400a, 240a) of a body part (400, 240) constituting a tool holder 300, has a tool passage 740 and at least one cutout part 730. The tool passage 740 has an opening part 740b at a tool rear end surface 710B. The cutout part 730 is defined by a cutout surface 731 that is formed by cutting out a tool outer peripheral surface 712, and has an opening part 730b at the tool rear end surface 710B in a region closer to the tool center line than the opening part 740b. By supplying a coolant from a flow inlet 450a into the body part interior space, a movable member 500 moves toward a front end side. At this time, in the state in which a through hole 540 of the movable member 500 faces the tool passage 740 of the tool 700, a movable member front end surface portion 530A abuts against a region of the tool rear end surface 710B around the opening part 740b.

## Description

### TECHNICAL FIELD

The present application discloses techniques that can change a tool protruding length while maintaining coolant supply characteristics for a tool in a tool holder and in a tool holding device that holds a tool.

### BACKGROUND ART

A tool holder that holds a tool is used in a machine tool for machining metal workpieces. The tool holder is supported by a support device. Furthermore, when machining a workpiece using a tool, a coolant such as an oil (which may be referred to as a "cooling medium") needs to be sprayed onto a cutting edge or the like of the tool for lubrication of the workpiece and the tool, for cooling of the workpiece or the tool, for removal (cleaning) of chips (which also may be referred to as "swarf") generated by the machining operation, etc. Therefore, a tool holder having a coolant supply mechanism that supplies a coolant is used. It is noted that the coolant is supplied from the support device to the tool holder.

A tool holder having a coolant supplying mechanism is disclosed, for example, in Patent Document 1 (JP 2001-287135 A). In the tool holder disclosed in Patent Document 1, a tool having a tool passage that opens at a tool rear end surface is used.

The tool holder comprises a body member having a body member interior space into which a tool is inserted, and a wall surface that is provided on the rear end side of the body member interior space and that forms a coolant supply port. Furthermore, the tool will be inserted into the body member interior space until the tool rear end surface abuts on the wall surface that forms the coolant supply port. In this manner, the coolant supplied from the coolant supply port via the tool passage is sprayed onto a cutting edge or the like of the tool.

The tool holder has a tool holding mechanism that holds the tool, which has been inserted into the body member interior space. The tool holder disclosed in Patent Document 1 has a tool holding mechanism constituted by a collet that holds a tool outer peripheral surface of a tool body member.

In addition, a tool holder that has a tool holding mechanism different from the tool holding mechanism disclosed in Patent Document 1 is disclosed in Patent Document 2. The tool holding mechanism disclosed in Patent Document 2 is constituted by a cutout part formed in a tool body member and a rotation stopping member. The cutout part is defined by a cutout surface that was formed by cutting out a tool holding member outer peripheral surface. The rotation stopping member is movably disposed in a hole that is formed in a body member of the tool holder and extends in a radial direction. And, in a state in which the tool has been inserted into the body member interior space, the rotation stopping member is moved radially inward from a body member inner peripheral surface so as to abut on the cutout surface of the tool. The tool is held in a state in which rotation has been restricted by the rotation stopping member pressing the cutout surface of the tool.

### PRIOR ART DOCUMENTS

### PATENT DOCUMENTS

Patent Document 1: JP 2001-287135 A
Patent Document 2: JP 2001-87969 A

### SUMMARY OF THE INVENTION

### PROBLEM TO BE SOLVED BY THE INVENTION

The cutout part disclosed in Patent Document 2 can be provided in the tool disclosed in Patent Document 1. Specifically, a tool having a tool passage that opens at a tool rear end surface and a cutout part that opens at the tool rear end surface may be used.

In this case, when performing machining in a state in which the tool rear end surface has abutted on a wall surface in which a coolant supply port is disclosed, a coolant supplied from a coolant supply port would not flow to the cutout part.

However, when performing machining in a state in which the tool rear end surface is not abutting on the wall surface in which the coolant supply port is formed, a space would exist between the wall surface in which the coolant supply port is formed and the tool rear end surface. In this situation, coolant supplied from the coolant supply port would flow to the cutout part via this space. If coolant flows to the cutout part, the flow rate of the coolant flowing through the tool passage would be reduced, so that the desired coolant supply characteristics could not be obtained.

Therefore, in the tool holder disclosed in Patent Document 1, the protruding length of the tool, which has the tool passage and the cutout part that have respective opening parts in/at the tool rear end surface, cannot be changed. The protruding length of the tool is the length that the cutting edge(s) of the tool protrude(s) from a body member front end surface.

Accordingly, an object of the present disclosure is to disclose techniques that can change the tool protruding length while maintaining the coolant supply characteristics for the tool.

### MEANS FOR SOLVING THE PROBLEM

A first disclosure relates to a tool holder that holds a tool having at least one cutout part and a tool passage. The cutout part of the tool is defined by a cutout surface that was formed by cutting out a tool outer peripheral surface, and has an opening part at a tool rear end surface. In addition, the tool passage of the tool has an opening part at a region of the tool rear end surface that is closer to a tool center line than the opening part of the cutout part.

The tool holder of the present disclosure includes a body part, a tool holding mechanism and a movable member.

The body part has a body part inner peripheral surface, a body part front end surface, a body part interior space defined by the body part inner peripheral surface, a flow inlet and a first passage that connects the flow inlet with the body part interior space. The body part interior space extends in an axial direction and has an opening part at a front end side in which the tool insertable.

The tool holding mechanism is configured to detachably hold the tool that has been inserted into the body part interior space. A known tool holding mechanism that includes a cutout surface that defines the cutout part as a structural element or a known tool holding mechanism that does not include a cutout surface that defines the cutout part as a structural element can be used as the tool holding mechanism.

The movable member has a movable member front end surface, a movable member rear end surface, a movable member outer peripheral surface, and a through hole formed between the movable member front end surface and the movable member rear end surface. Furthermore, the movable member is disposed in the body part interior space so as to be movable along the body part inner peripheral surface in a state in which a gap between the movable member outer peripheral surface and the body member inner peripheral surface is sealed.

By supplying a coolant from the flow inlet into the body part interior space via the first passage, the movable member moves along the body part inner peripheral surface toward the front end side. And, it is configured such that the movable member front end surface abuts on the tool rear end surface in a state in which the tool passage of the tool, which has been inserted into the body part interior space, and the through hole of the movable member face each other.

In the present disclosure, in case the tool protruding length is long, the movable member moves toward the front end side and the movable member front end surface abuts on the tool rear end surface. The coolant is prevented thereby from flowing from the through hole of the movable member to the cutout part of the tool.

By using the tool holder of the present disclosure, a tool having a tool passage and a cutout part that opens at the tool rear end surface can be used, and the tool protruding length can be changed while maintaining the coolant supply characteristics for the tool.

In a different aspect of the first disclosure, the movable member front end surface has a movable member front end surface portion that protrudes toward the front end side in a region around the through hole. And, it is configured such that the movable member front end surface portion abuts on the tool rear end surface.

In the present aspect, the tool rear end surface can be easily abutted on the movable member front end surface in the state in which the tool passage and the through hole of the movable member face each other.

In a different aspect of the first disclosure, the movable member front end surface portion is formed of an elastic body.

In the present aspect, the tool rear end surface can be easily and solidly abutted on the movable member front end surface portion in the state in which the tool passage and the through hole of the movable member face each other.

In a different aspect of the first disclosure, it has a movement restricting surface that restricts movement of the movable member in the body part interior space toward the rear end side.

In the present aspect, the movable member can be restricted from moving toward the rear end side beyond a prescribed range.

In a different aspect of the first disclosure, the body part has a flow outlet formed at the body part front end surface, and a second passage that connects the flow inlet with the flow outlet. It further has a switching member that switches the second passage to an open state or a closed state. And, it is configured such that the supply of coolant from the flow inlet to the flow outlet is allowed when the second passage is switched to the open state. Furthermore, it is configured such that the supply of coolant from the flow inlet to the flow outlet is inhibited when the second passage is switched to the closed state.

In a situation in which a tool having a tool passage and a cutout part that opens at the tool rear end surface is used, the second passage is switched to the closed state by the switching member.

On the other hand, in a situation in which a tool that has a cutout part that opens at the tool rear end surface but does not have a tool passage that opens at the tool rear end surface is used, the second passage is switched to the closed state by the switching member. In this case, the coolant is sprayed toward a cutting edge or the like of the tool from the flow outlet formed in the body part front end surface.

In the present aspect, a tool that has a tool passage that opens at the tool rear end surface and a tool that does not have a tool passage that opens at the tool rear end surface can be used.

In a different aspect of the first disclosure, the tool holding mechanism includes at least one hole that is formed in the body part, and at least one rotation stopping member that is disposed in the at least one hole so as to be moveable along the extending direction of the hole.

The hole opens at the body part inner peripheral surface and extends in a radial direction.

The rotation stopping member is configured to abut on the cutout surface of the tool, which is inserted into the body part interior space, by moving radially inward along the extending direction of the hole and protruding radially inward from the body part inner peripheral surface.

In the present aspect, it is possible to hold the tool by using the cutout part of the tool.

A second disclosure relates to a tool holding device including a tool holder that holds a tool and a support device that supports the tool holder.

Furthermore, any of the above-described tool holders is used as the tool holder.

The second disclosure has the same effect as the tool holder of the first disclosure.

### EFFECT OF THE INVENTION

By using a tool holder or a tool holding device of the present disclosure, it is possible to change the tool protruding length while maintaining the coolant supply characteristics for the tool.

### BRIEF DESCRIPTION OF THE DRAWINGS

FIG. 1 is a sectional view showing a tool holding device of one embodiment.
FIG. 2 is a sectional view showing a tool holder that comprises the tool holding device of the one embodiment.
FIG. 3 is drawings showing a movable member that comprises the tool holder of the one embodiment.
FIG. 4 is a sectional view showing a support device that comprises the tool holding device of the one embodiment.
FIG. 5 is a sectional view taken along arrow line V-V in FIG. 1.
FIG. 6 is drawings showing one example of a tool having a tool passage.
FIG. 7 is a drawing illustrating an operation that supplies a coolant to the tool having the tool passage.
FIG. 8 is a drawing illustrating an operation that supplies a coolant to the tool having the tool passage.
FIG. 9 is a drawing illustrating an operation that supplies a coolant to a tool not having a tool passage.

### MODES FOR CARRYING OUT THE INVENTION

The following detailed description is merely intended to teach a person skilled in the art further details for practicing preferred aspects of the present teachings and is not intended to limit the scope of the invention. Combinations of features and steps disclosed within the following detailed description may not be necessary to practice the invention in the broadest sense, and are instead taught merely to particularly describe some representative examples of the invention, which detailed description will now be given with reference to the accompanying drawings.

Representative embodiments of a tool holding device and a tool holder according to the present disclosure will be described with reference to the drawings.

In the following description, a direction along a center line P of a body part interior space is defined as an "axial direction". A side from which a tool is inserted into the body part interior space (the side shown by an arrow A in figures) is defined as a "front end side" or "one side in the axial direction". A side opposite to the side from which the tool is inserted into the body part interior space (the side shown by an arrow B in figures) is defined as a "rear end side" or "the other side in the axial direction". Of course, the front end side and the rear end side may be defined the other way around.

Furthermore, when viewed from the one side or the other side in the axial direction, a direction of a line passing through the center line P is defined as a "radial direction". Along the radial direction, the center line P side is defined as "inward in the radial direction", and the side opposite to the center line P is defined as "outward in the radial direction".

Furthermore, when viewed from the one side or the other side in the axial direction, a direction along a circle around the center line P is defined as a "circumferential direction".

It is noted that, with reference to the tool, the terms "axial direction", "front end side", "rear end side", "radial direction", "inward in the radial direction", "outward in the radial direction" and "circumferential direction" respectively refer to the "axial direction", "front end side", "rear end side", "radial direction", "inward in the radial direction", "outward in the radial direction" and "circumferential direction" in the state in which the tool is inserted into the body part interior space.

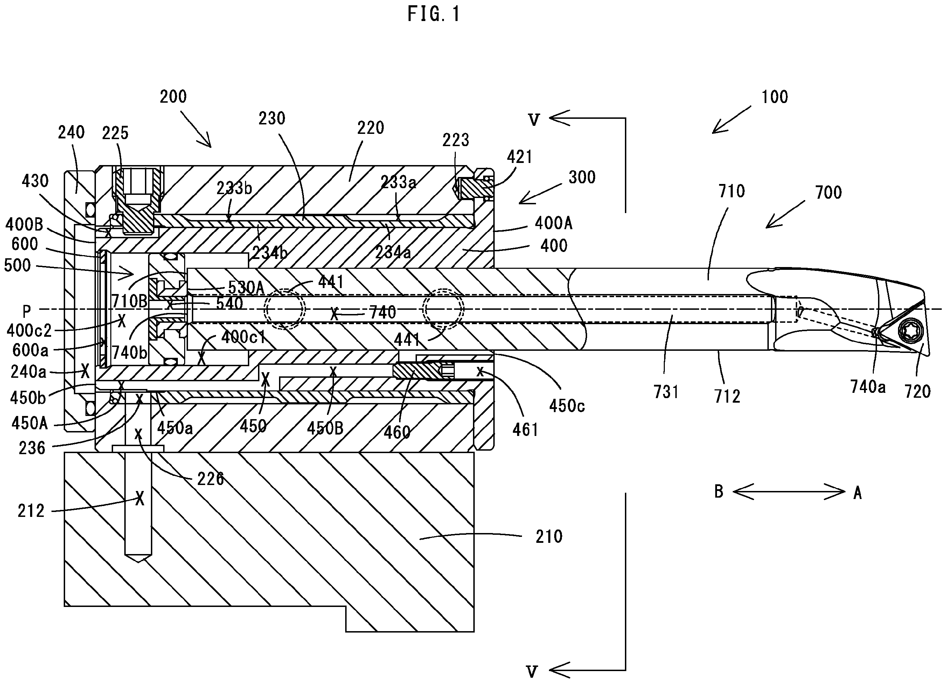

One embodiment 100 of a tool holding device of the present disclosure will be described with reference to FIGS. 1 to 6.
FIG. 1 is a sectional view of the tool holding device 100.

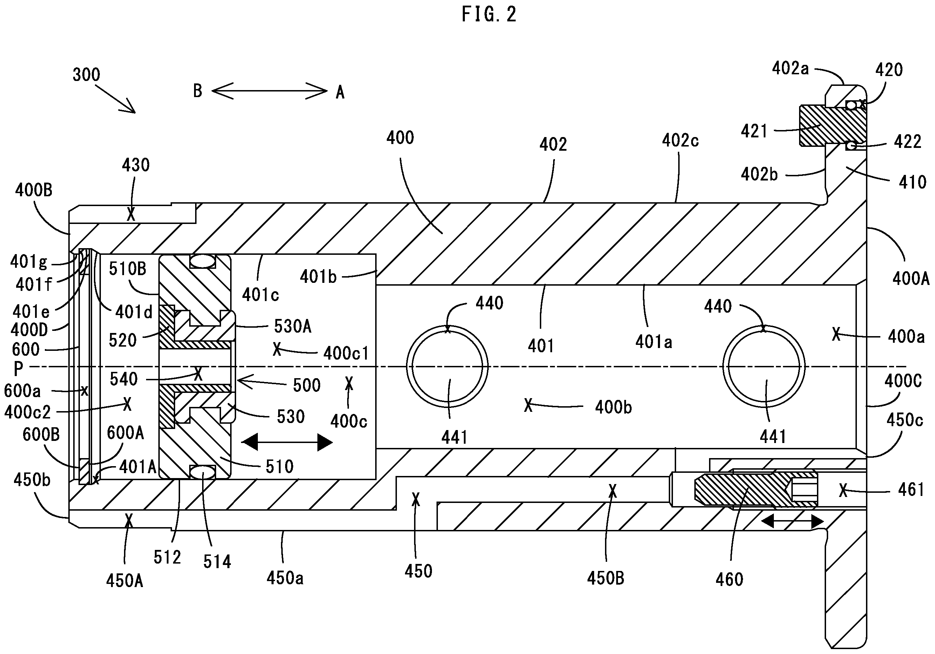

FIG. 2 is a sectional view of a tool holder 300 that constitutes the tool holding device 100. It is noted that the tool holder 300 shown in FIG. 2 is one embodiment of a tool holder according to the present disclosure.

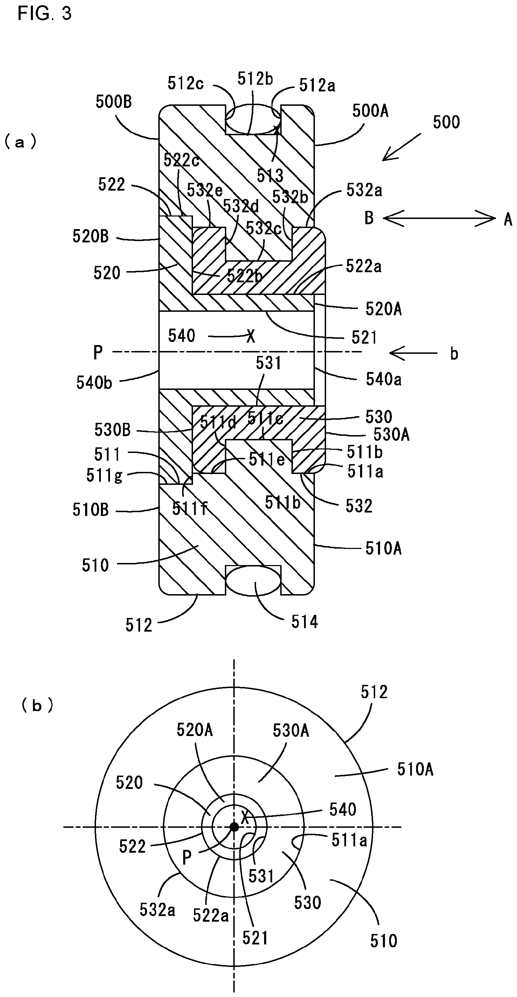

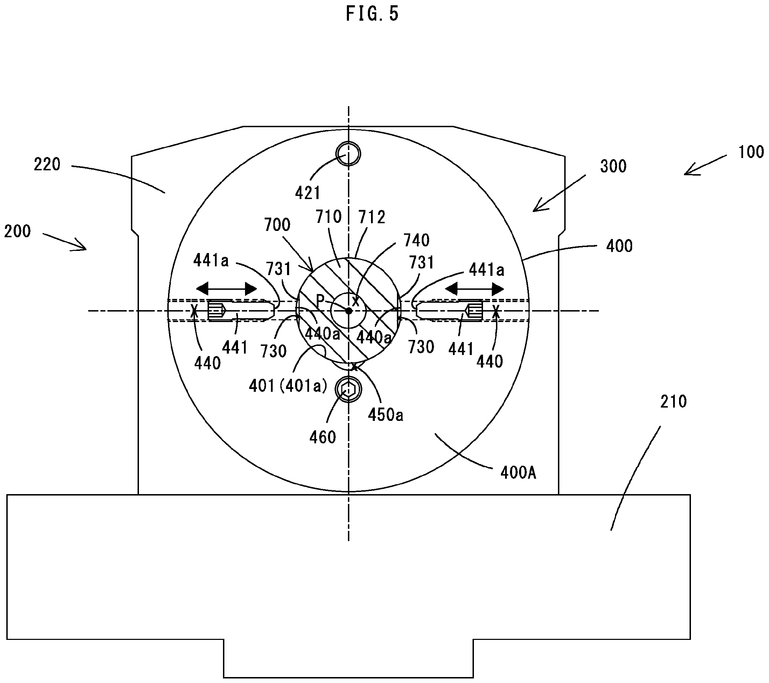

FIG. 3 is drawings showing a movable member 500 that comprises the tool holder 300. FIG. 5(a) is a sectional view of the movable member 500, and FIG. 5(b) is a view in the direction of arrow b in FIG. 5(a).

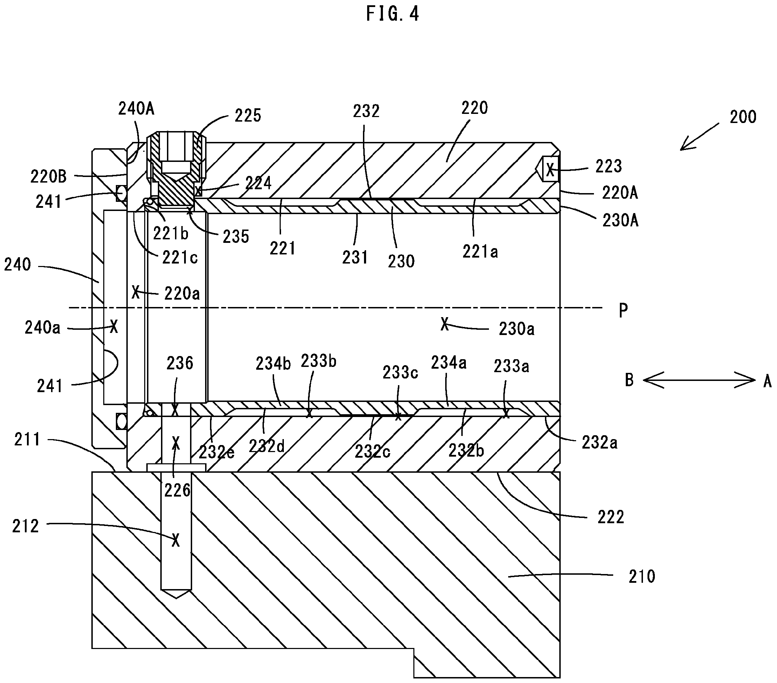

FIG. 4 is a sectional view of a support device 200 that comprises the tool holding device 100.
FIG. 5 is a sectional view taken along arrow line V-V in FIG. 1.

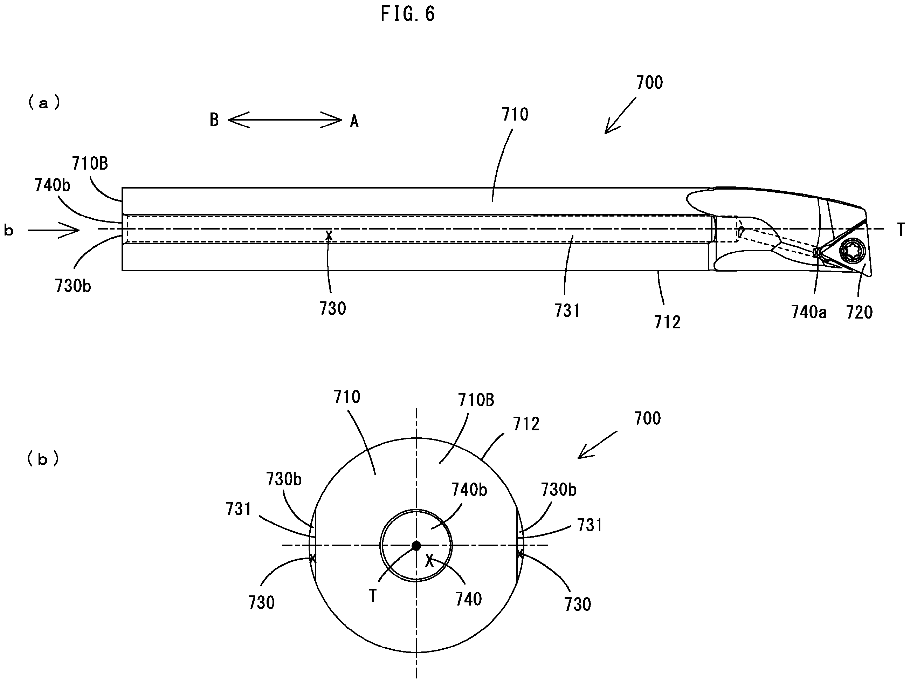

FIG. 6 is drawings showing one example of a tool having a tool passage open at a tool rear end surface.

First, one example 700 of a tool that can be used in the tool holding device 100 will be described with reference to FIG. 6.

The tool 700 has a tool body member 710 extending in an axial direction. A cutting edge 720 is provided on a front end side of the tool body member 710.

The tool body member 710 has a tool body member outer peripheral surface 712. In the present embodiment, the tool body member outer peripheral surface 712 extends along a circle around a tool center line T. The tool center line T is the center line of 710 of the alternating body member.

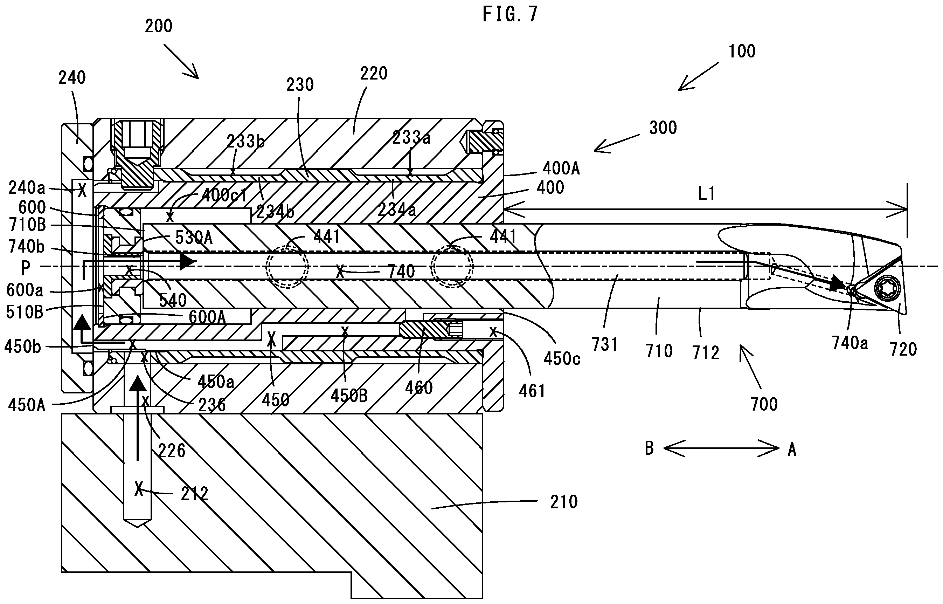

On the outer periphery, the tool body member 710 has cutout parts 730 that extend in the axial direction. In FIG. 6, the cutout parts 730 are provided at two locations that oppose each other in the circumferential direction. The number and the formation positions of the cutout parts 730 can be appropriately selected. The cutout parts 730 are defined by cutout surfaces 731 that were formed by cutting out the tool outer peripheral surface 712. In FIG. 7, the cutout surfaces 731 extend in a direction orthogonal to a line passing through the tool center line T and in the axial direction.

In addition, the cutout parts 730 open at a tool rear end surface 710B. Specifically, the cutout parts 730 have opening parts 730b formed on the tool rear end surface 710B.

Furthermore, the tool holding member 710 has a tool passage 740 for spraying a coolant. The tool passage 740 extends in the axial direction. The tool passage 740 opens at the tool rear end surface 710B. Specifically, the tool passage 740 has an opening part 740b formed at the tool rear end surface 710B. The opening part 740b is formed at a region that is closer to the tool center line T than the opening parts 730b. In FIG. 7, the tool passage 740 is formed in the center of the tool body member 710. And, the tool passage 740 has a spray port 740a formed at the front end side of the tool body member 710. The spray port 740a is formed near the cutting edge 720 and is configured such that the coolant is sprayed therefrom in the direction of the cutting edge 720.

The tool body member outer peripheral surface 712 corresponds to a "tool outer peripheral surface" of the present invention.

The tool holding device 100 of the present embodiment is constituted by a support device 200 and a tool holder 300.

The tool holder 300 has a body part, a tool holding mechanism and a movable member 500.

The body part is constituted by a body member 400 and a cover 240. In the present embodiment, the cover 240 is attached to a support member 220 constituting the support device 200. Therefore, the cover 240 will be described below together with the support device 200.

The body member 400 is formed in a cylindrical shape and has a body member front end surface 400A, a body member rear end surface 400B, a body member inner peripheral surface 401 and a body member outer peripheral surface 402.

The body member inner peripheral surface 401 defines a body member interior space 400a that extends in the axial direction. The body member interior space 400a has an opening part 400C formed at the body member front end surface 400A, and an opening part 400D formed at the body member rear end surface 400B. The body member interior space 400a is formed such that the tool 700 is insertable therein from the front end side (the opening part 400C side).

The body member inner peripheral surface 401 has body member inner peripheral surface portions 401a to 401g. The body member inner peripheral surface portions 401a to 401g each have a circular cross-section.

The body member inner peripheral surface portions 401a and 401c extend in the axial direction. The inner diameter of the body member inner peripheral surface portion 401c is set to be larger than the inner diameter of the body member inner peripheral surface portion 401a. The body member inner peripheral surface portion 401b extends in the radial direction and forms a stepped surface that connects the body member inner peripheral surface portions 401a and 401c. A body member interior space portion 400b is defined by the body member inner peripheral surface portion 401a. A body member interior space portion 400c is defined by the body member inner peripheral surface portion 401c.

The body member inner peripheral surface portion 401b serves as a movement restricting surface (described below) that restricts movement of the movable member 500 toward the front end side.

The body member inner peripheral surface portion 401a is formed such that the tool center line T of the tool 700 will extend parallel to the axial direction in a state in which the tool 700 has been inserted into the body member interior space portion 400b. Specifically, an inner wall of the body member interior space 400a (the body member interior space portion 400b) is configured such that the tool center line T of the tool 700 will extend parallel to the axial direction.

A recess 401A that is recessed radially outward and extends in the circumferential direction is defined by the body member inner peripheral surface portions 401d to 401g. A ring member 600, which is described below, is disposed in the recess 401A.

The body member outer peripheral surface 402 has body member outer peripheral surface portions 402a to 402c.

A flange 410 that extends outward in the radial direction is defined by the body member outer peripheral surface portions 402a, 402b and the body member front end surface 400A.

At a prescribed position of the flange 410A, a through hole 420 that connects the body member front end surface 400A with the body member outer peripheral surface portion 402B is formed. A pin 421 is inserted into the through hole 420. The pin 421 is inserted so as to protrude from the body member outer peripheral surface portion 402b. The pin 421 is inserted into a recess 223 of the support member 220, as described below.

An O-ring 422 is disposed between a wall surface of the through hole 420 and the pin 421.

A groove 430 extending in the axial direction is formed on a rear end side of the body member outer peripheral surface portion 402c. A pin 225 is inserted into the groove 430, as described below.

In addition, through holes 440, which connect the body member inner peripheral surface portion 401a with the body member outer peripheral surface portion 402c, are formed in the body member outer peripheral surface 402 at positions corresponding to the body member interior space portion 400b. In the present embodiment, as shown in FIG. 5, the through holes 440 are formed at two positions that oppose each other in the circumferential direction. Furthermore, as shown in FIG. 2, the through holes 440 are formed at two positions spaced apart from each other in the axial direction. Pins 441 (see FIG. 5) are respectively inserted into the through holes 440. Specifically, the pins 441 are inserted into the through holes 440 by screw-fastening a female thread formed on an inner peripheral surface of the through hole 440 and a male thread formed on an outer periphery of the pin 44.

The pins 441 are disposed so as to abut on the cutout surfaces 731 of the tool 700, which has been inserted into the body member interior space 400a. The number and arrangement positions of the through holes 440 and the pins 442 can be appropriately selected.

The pins 441 correspond to a "rotation stopping member" of the present invention. A "tool holding mechanism" of the present invention is constituted by the cutout surface(s) 731 of the tool 700 and the pin(s) 441.

In addition, a passage 450 that supplies a coolant is formed in the body member 400. The passage 450 has a flow inlet 450a that is formed in the body member outer peripheral surface 402 and extends in the axial direction, a first flow outlet 450b that is formed at the body member rear end surface 400B, and a second flow outlet 450c that is formed at the body member front end surface 400A. The second flow outlet 450c is configured such that the coolant is sprayed therefrom toward the cutting edge of the tool, which is inserted in the body member interior space 400a.

In addition, the passage 450 includes a first passage 450A and a second passage 450B. The first passage 450A connects the flow inlet 450a with the first flow outlet 450b. The first passage 450A supplies the coolant, which has flowed into the flow inlet 450a, to the first flow outlet 450b. The second passage 450b connects the flow inlet 450a with the second flow outlet 450c. The second passage 450B supplies the coolant, which has flowed into the flow inlet 450a, to the second flow outlet 450c.

Furthermore, it has a switching member that switches the second passage 450B to an open state or a closed state. In the present embodiment, the switching member includes a hole 461 that is formed in the body member 400 and a pin 460 that is inserted into the hole 461.

The hole 461 extends in the axial direction and opens at the body member front end surface 400A. A female thread is formed on an inner peripheral surface of the hole 461.

In addition, a male thread, which is screw-fastenable with the female thread formed on the inner peripheral surface of the hole 461, is formed on an outer peripheral surface of the pin 460. The pin 460 is inserted into the hole 461 with the male thread screw-fastened with the female thread. Thereby, the pin 460 is movable along the extending direction of the hole 461.

When the pin 460 is rotated in one direction, the pin 460 moves toward the rear end side (toward the left side in FIG. 2). Thereby, the second passage 450B becomes the closed state and the coolant supply from the flow inlet 450a to the second flow outlet 450c is inhibited (stopped).

On the other hand, when the pin 460 is rotated in the other direction, the pin 460 moves toward the front end side (toward the right side in FIG. 2). Thereby, the second passage 450B becomes the open state and the supply of coolant from the flow inlet 450a to the second outlet 450c is allowed.

The second flow outlet 450c corresponds to a "flow outlet formed at the body part front end surface" of the present invention. The second passage 450B corresponds to a "second passage that connects the flow inlet with the flow outlet" of the present invention. The pin 460 corresponds to a "switching member that switches the second passage to an open state in which the supply of coolant from the flow inlet to the flow outlet is allowed, or switches the second passage to a closed state in which the supply of coolant from the flow inlet to the flow outlet is inhibited" of the present invention.

The movable member 500 is disposed within the body member interior space 400a (specifically, the body member interior space portion 400c) so as to be movable along the body member inner peripheral surface 401 (specifically, the body member inner peripheral surface portion 401c).

As shown in FIG. 3, the movable member 500 has a movable member front end surface 500A, a movable member rear end surface 500B, a movable member inner peripheral surface, a movable member outer peripheral surface, and a through hole formed between the movable member front end surface 500A and the movable member rear end surface 500B.

In the present embodiment, the movable member 500 is constituted by a first member 510, a second member 520 and a third member 530. The first member 510 and the second member 520 are formed of metal (such as stainless steel), and the third member 530 is formed of an elastic body. For example, a rubber is used as the elastic body.

The first member 510 is formed in a cylindrical shape, and has a front end surface 510A, a rear end surface 510B, an inner peripheral surface 511 and an outer peripheral surface 512.

The inner peripheral surface 511 has inner peripheral surface portions 511a to 511g.

The outer peripheral surface 512 has outer peripheral surface portions 512a to 512c.

The inner peripheral surface portions 511a, 511c, 511e, 511g and the outer peripheral surface 512 extend in the circumferential direction and the axial direction, and have a circular cross-section.

The front end surface 510A, the rear end surface 510B and the inner peripheral surface portions 511b, 511d, 511f extend in the circumferential direction and the radial direction.

A groove 513 extending in the circumferential direction is defined by the outer peripheral surface portions 512a to 512c. An O-ring 514 is disposed in the groove 513. Thus, the movable member 500 is configured to be movable along the body member inner peripheral surface portion 401c in a state in which a gap between the outer peripheral surface 512 and the body member inner peripheral surface portion 401c is sealed by the O-ring 514.

The second member 520 is formed in a cylindrical shape, and has a front end surface 520A, a rear end surface 520B, an inner peripheral surface 521 and an outer peripheral surface 522.

The outer peripheral surface 522 has outer peripheral surface portions 522a to 522c.

The inner peripheral surface 521 and the outer peripheral surface portions 522a, 522c extend in the circumferential direction and the axial direction, and have a circular cross-section.

The front end surface 520A, the rear end surface 520B and the outer peripheral surface portion 522b extend in the circumferential direction and the radial direction.

The second member 520 is inserted into an interior space that is defined by the inner peripheral surface 511 of the first member 510. At this time, the outer peripheral surface portions 522b, 522c of the second member 520 abut on the inner peripheral surface portions 511f, 511g of the first member 510, respectively, whereby movement of the second member 520 relative to the first member 510 in the radial direction and the axial direction is restricted.

The third member 530 is formed in a cylindrical shape, and has a front end surface 530A, a rear end surface 530B, an inner peripheral surface 531 and an outer peripheral surface 532.

The outer peripheral surface 532 has outer peripheral surface portions 532a to 522e.

The inner peripheral surface 531 and the outer peripheral surface portions 532a, 532c, 532e extend in the circumferential direction and the axial direction, and have a circular cross-section.

The front end surface 530A, the rear end surface 530B and the outer peripheral surface portions 532b, 532d extend in the circumferential direction and the radial direction.

The third member 530 is disposed between the first member 510 and the second member 520. At this time, a projection that is defined by the inner peripheral surface portions 511b to 511d of the first member 510 is fitted in a recess that is defined by the outer peripheral surface portions 532b to 532d of the third member 530. Thereby, movement of the third member 530 relative to the first member 510 in the radial direction and the axial direction is restricted.

Furthermore, the outer peripheral surface portion 522b of the second member 520 abuts on the rear end surface 530B of the third member 530. Thereby, movement of the second member 520 relative to the third member 530 in the axial direction is restricted.

In the present embodiment, the movable member front end surface 500A is formed by the front end surface 510A of the first member 520, the front end surface 520A of the second member 520 and the front end surface 530A of the third member 530. The front end surfaces 510A, 520A, 530A respectively constitute movable member front end surface portions of the movable member front end surface 500A.

The movable member rear end surface 500B is formed by the rear end surface 510B of the first member 510 and the rear end surface 520B of the second member 520. The rear end surfaces 510B, 520B respectively constitute movable member rear end surface portions of the movable member rear end surface 500B.

The movable member inner peripheral surface is formed by the inner peripheral surface 521 of the second member 520.

The through hole of the movable member 500 is formed by the through hole 540 of the second member 520.

The movable member outer peripheral surface is formed by the outer peripheral surface 512 of the first member 510.

In the present embodiment, it is configured such that, in a state in which the movable member 500 has been disposed in the body member interior space portion 500c, the center line of the through hole 540 of the movable member 500 substantially coincides with the center line P of the body member interior space 400a.

And, the inner diameter of the through hole 540 (specifically, the inner diameter of an opening part 540a on the front end side of the through hole 540) of the movable member 500 is configured to be substantially equal to the inner diameter of the tool passage 740 (specifically, the opening part 740b at the rear end side of the tool passage 740) of the tool 700.

And, the movable member front end surface portion 530A of the movable member 500 is disposed around the through hole 540 (specifically, the opening part 540a of the through hole 540).

And, the movable member front end surface portion 530A protrudes from the movable member front end surface portions 510A, 520A toward the front end side.

Thus, when the movable member front end surface 500A of the movable member 500 abuts on the tool rear end surface 710B of the tool 700, the movable member front end surface portion 530A abuts on the tool rear end surface 710B around the tool passage 740 (the opening part 740b) in a state in which the through hole 540 (the opening part 540a) of the movable member 500 and the tool passage 740 (the opening part 740b) face each other. That is, a space does not exist between the movable member front end surface portion 530A and the tool rear end surface 710B.

Therefore, the coolant can be prevented from flowing from the through hole 540 of the movable member 500 to the cutout parts 730 of the tool 700.

Furthermore, the movable member front end surface portion 530A is formed of the elastic body. Thus, the tool rear end surface 710B can be solidly abutted on the movable member front end surface portion 530A. That is, the existence of a gap between the movable member front end surface portion 530A and the tool rear end surface 710B can be reliably prevented.

It is noted that "in a state in which the through hole 540 (the opening part 540a) of the movable member 500 and the tool passage 740 (the opening part 740b) face each other" means "in a state in which the through hole 540 (the opening part 540a) of the movable member 500 and the tool passage 740 (the opening part 740b) at least partially overlap each other in the axial direction".

The ring member 600 has a ring member front end surface 600A, a ring member rear end surface 600B, and a through hole 600a formed between the ring member front end surface 600A and the ring member rear end surface 600B. The ring member front end surface 600A and the ring member rear end surface 600B extend in the circumferential direction and the radial direction. A ring member outer peripheral surface 602 is formed in a circular shape. It is noted that the shape of the ring member outer peripheral surface 6002 is not limited to a circular shape.

As shown in FIG. 2, the ring member 600 is disposed in the recess 401A that is formed on the rear end side of the body member interior space 400a.

The ring member front end surface 600A of the ring member 600 serves as a movement restricting surface that restricts movement of the movable member 500 toward the rear end side.

Furthermore, a through hole 614 of the ring member 600 serves as a coolant flow inlet that supplies the coolant into the body member interior space 400a.

The support device 200 has a base 210 and a support part.

The base 210 has a mounting surface 211 on which the support part is mounted. And, a passage 212 that supplies the coolant is formed in the base 210.

The support part is constituted by a support member 220 and a sleeve 230.

The support member 220 is formed in a cylindrical shape, and has a support member front end surface 220A, a support member rear end surface 330B, a support member inner peripheral surface 221, a support member interior space 220a that is defined by the support member inner peripheral surface 221, and a mounted surface 222.

The support member inner peripheral surface 221 has a circular cross-section.

The support member 220 is mounted on the base 210 such that the mounted surface 222 faces the mounting surface 211.

A recess 223 is formed on the support member front end surface 220A.

In addition, a through hole 224 is formed in the support member 220 between a support member outer peripheral surface and the support member inner peripheral surface. A female thread, which is screw-fastenable with a male thread formed on an outer peripheral surface of a pin 225, is formed on an inner peripheral surface of the through hole 224.

Furthermore, a passage 226 is formed in the support member 220 at a position facing the passage 212 formed in the base 210.

The sleeve 230 is formed in a cylindrical shape, and has a sleeve front end surface 230A, a sleeve rear end surface 230B, a sleeve inner peripheral surface 231, a sleeve outer peripheral surface 232, and a sleeve interior space 230a defined by the sleeve inner peripheral surface 231.

The sleeve inner peripheral surface 231 and the sleeve outer peripheral surface 232 have a circular cross-section.

The sleeve outer peripheral surface 232 has sleeve outer peripheral surface portions 232a to 232e. The outer diameter of the sleeve outer peripheral surface portion 232c is configured to be smaller than the outer diameter of the sleeve outer peripheral surface portions 232a, 232e. The outer diameter of the sleeve outer peripheral surface portions 232b, 232d is configured to be smaller than the outer diameter of the sleeve outer peripheral surface portion 232c. Therefore, thin-walled gripping parts 234a, 234b are formed between the sleeve inner peripheral surface 231 and the sleeve outer peripheral surface portions 232a, 232d.

The sleeve 230 is inserted into and fixed in the support member interior space 220a.

At this time, pressurizing chambers 233a, 233b are formed between the support member inner peripheral surface 221 and the sleeve outer peripheral surface portions 232b, 232d. Furthermore, a communication passage 233c that connects to the pressurizing chambers 233a, 233b is formed between the support member inner peripheral surface 221 and the sleeve outer peripheral surface portion 232c.

A support part interior space is formed by the support member interior space 220a and the sleeve interior space 230a. A support part inner peripheral surface is formed by the support member inner peripheral surface 221 (specifically, a support member inner peripheral surface portion 221b) and the sleeve inner peripheral surface 231.

In addition, a through hole 235 is formed in the sleeve 230 at a position facing the through hole 224 that is formed in the support member 220.

Furthermore, a passage 236 is formed in the sleeve 230 at a position facing the passage 226 that is formed in the support member 220.

As shown in FIG. 1, the body member 400 is inserted into the sleeve interior space 230a (the support part interior space).

At this time, the body member 400 is inserted until the body member outer peripheral surface portion 402b abuts on the support member front end surface 220A. Thereby, the position of the body member 400 (the tool holder 300) relative to the support member 220 (the support part) in the axial direction is stipulated.

Furthermore, the pin 421 that is inserted into the through hole 420 of the body member 400 (see FIG. 2) is inserted into the recess 223 that is formed in the support member 220. Thereby, the position of the body member 400 (the tool holder 300) relative to the support member 220 (the support part) in the circumferential direction is stipulated.

In addition, the pin 225 is moved inward in the radial direction and will insert into the through hole 224 of the support member 220 and the through hole 235 of the sleeve 230. Furthermore, a tip of the pin 225 will insert into the groove 430 of the body member 400. Thereby, movement toward the rear end side and rotation (position) in the circumferential direction of the body member 400 (the tool holder 300) relative to the support member 220 (the support part) are restricted.

It is noted that, when the position of the body member 400 in the circumferential direction relative to the support member 220 is stipulated, the flow inlet 450a of the body member 400 is located at a position facing the passage 236 of the sleeve 230.

In the present embodiment, the pin 421 and the pin 225 are provided, but only either of them may be provided. That is, it may be configured such that the position of the body member 400 (the tool holder 300) relative to the support member 220 (the support part) in the circumferential direction is stipulated by the pin 421 or the pin 225.

In addition, the pressure within the pressurizing chambers 233a, 233b is increased in a state in which the position of the body member 400 in the circumferential direction of the support member 220 has been adjusted.

When the pressure of the pressurizing chambers 233a, 233b is increased, parts of the sleeve inner peripheral surface 231 corresponding to the gripping parts 234a, 234b elastically deform inward. Thus, the body member outer peripheral surface 402 of the body member 400 is held by the gripping parts 234a, 234b.

The cover 240 is mounted on the support member 220. In the present embodiment, the cover 240 is mounted on the support member 220 such that a front end surface 240A of the cover 240 abuts on the rear end surface 220B of the support member 220. An O-ring 242 is disposed between the front end surface 240A of the cover 240 and the rear end surface 220B of the support member 220.

A rear end part of the body member interior space 400a of the body member 400 that has been inserted into the sleeve interior space 230a (the support part interior space) is closed by the cover 240.

That is, a body part interior space is formed by the body member interior space 400a and a cover interior space 240a. The coolant, which is supplied from the passage 212 of the base 210, is supplied into the body part interior space via the passage 226 of the support member 220, the passage 236 of the sleeve 230, the flow inlet 450a of the body member 400, the first passage 450A and the first flow outlet 450b.

In the present embodiment, the body part of the tool holder 300 is constituted by the body member 400 and the cover 240. A body part interior space of the tool holder 300 is formed by the body member interior space 400a and the cover interior space 240a. A body part inner peripheral surface of the tool holder 300 is formed by the body member inner peripheral surface 401 and the cover inner peripheral surface 241.

Next, an operation of the present embodiment will be described.

First, a case will be described in which the tool 700 shown in FIG. 5, in which the cutout parts 730 having the opening parts 730b are formed at the tool rear end surface 710B and the tool passage 740 having the opening part 740b is formed in the tool rear end surface 710B, is used.

An operation of a case, in which the tool 700 has been inserted into the body member interior space 400a such that the tool protruding length is the shortest, will be described with reference to FIG. 7. In FIG. 7, the pin 460 is set to a position that switches the second passage 450B to the closed state. That is, the supply of the coolant from the flow inlet 450a to the second flow outlet 450c is interrupted.

In FIG. 7, the movable member rear end surface 500B (the movable member rear end surface portion 510B) of the movable member 500 is abutting on the ring member front end surface 600A of the ring member 600. And, the tool rear end surface 710B of the tool 700 is abutting on the movable member front end surface 500A (the movable member front end surface portion 530A) of the movable member 500. In the state shown in FIG. 7, the tool protruding length is L1.

In the state shown in FIG. 7, the coolant supplied from the passage 212 of the base 210 flows into the body part interior space via the flow inlet 450a of the body member 400, the first passage 450A and the first flow outlet 450b. Then, the coolant flows into the tool passage 740 via the through hole 540 of the movable member 500. At this time, although the pressure of the coolant is applied to the movable member rear end surface 500B (the movable member rear end surface portions 520B, 530B) of the movable member 500, because the tool 700 is not moved toward the front end side, the movable member 500 also is not moved toward the front end side. Therefore, the coolant does not flow from the through hole 540 of the movable member 500 to the cutout parts 730 of the tool 700.

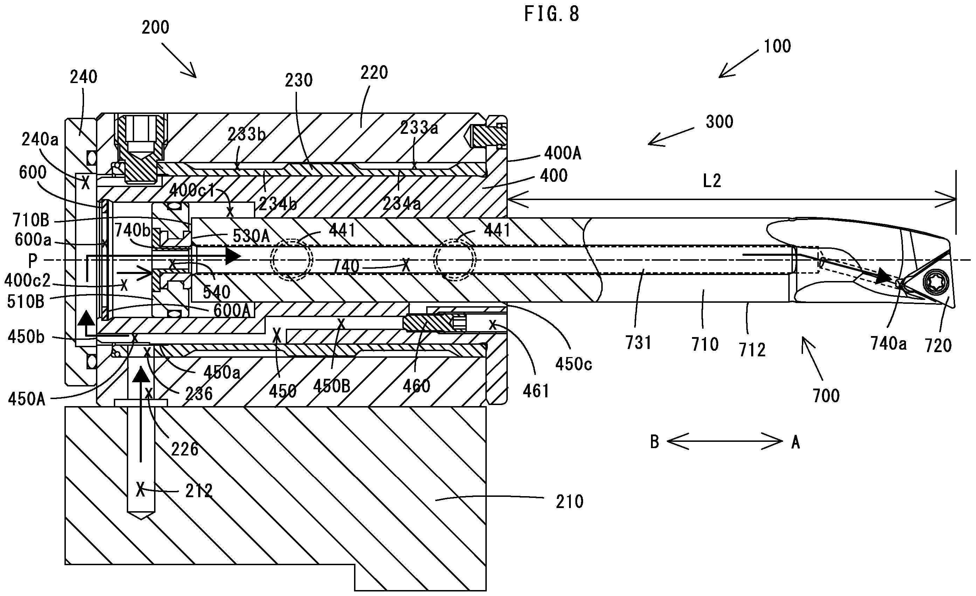

An operation of a case, in which the tool 700 has been inserted in the body member interior space 400a such that the tool protruding length is L2 longer than L1, will be described with reference to FIG. 8.

In FIG. 8, the tool rear end surface 710B is located at a position closer to the front end side than the position shown in FIG. 7. In the state shown in FIG. 8, the tool protruding length is L2 (>L1). Like in FIG. 7, in FIG. 8, the pin 460 is set to a position that switches the second passage 450B to the closed state.

In the state shown in FIG. 8, the movable member 500 is located in a region between the ring member front end surface 600A of the ring member 600 and the tool rear end surface 710B. FIG. 8 shows the state in which the coolant is supplied into the body part interior space.

In this state, when the coolant is supplied into the body part interior space via the flow inlet 450a of the body member 400, the first passage 450A and the first flow outlet 450b, the coolant flows through the through hole 540 of the movable member 500. At the same time, the pressure of the coolant is applied to the movable member rear end surface (the movable member rear end surface portions 510B, 520B) of the movable member 500. Thus, the movable member 500 moves toward the front end side. Then, the movable member front end surface 500A of the movable member 500 abuts on the tool rear end surface 700B of the tool 700.

At this time, the movable member front end surface 500A (the movable member front end surface portion 530A) abuts on the region of the tool rear end surface 710B around the tool passage 740 (the opening part 740b) in the state in which the through hole 540 (the opening part 540a) of the movable member 500 and the tool passage 740 (the opening part 740b) of the tool 700 face each other.

Thus, the coolant does not flow from the through hole 540 of the movable member 500 to the cutout parts 730 of the tool 700.

In the state shown in FIG. 8, as shown in FIG. 2, the body member interior space portion 400c defined by the body member inner peripheral surface portion 401c is divided by the movable member 500. That is, the body member interior space 400c is divided into a first divided interior space portion 400c1 on the front end side of the movable member 500 and a second divided interior space portion 400c2 on the rear end side of the movable member 500.

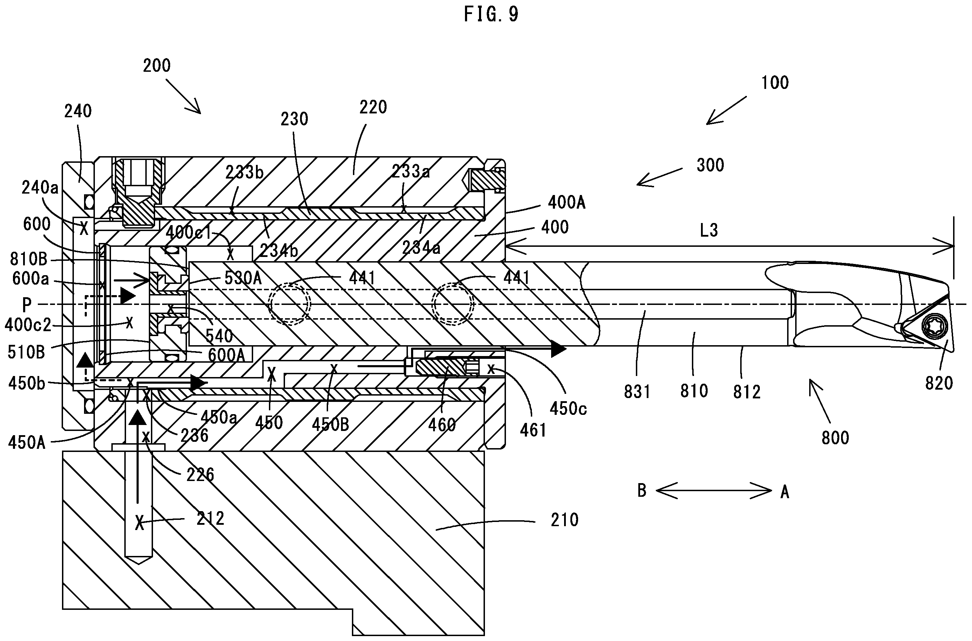

Next, an operation of a case, in which a tool 800 that does not have a tool passage is used, will be described with reference to FIG. 9.

With regard to the tool 800, cutout parts 830 each of which has an opening part 830b at a tool rear end surface 810B are formed. but a tool passage, which has an opening part at the tool rear end surface 810B, is not formed.

In a situation in which such a tool 800 is used, it is necessary to spray the coolant from the second flow outlet 450c formed in the body member front end surface 400A of the body member 400.

It is noted that, in FIG. 9, the tool 800 is inserted into the body member interior space 400a such that the tool protruding length is L3. The operation of situations that use the tool 800 is the same regardless of the tool protruding length. In FIG. 9, the pin 460 is set to a position that switches the second passage 450B to the open state. That is, the supply of the coolant from the flow inlet 450a to the second flow outlet 450c is allowed.

The coolant supplied to the flow inlet 450a flows into the body part interior space via the first passage 450A and also flows to the second flow outlet 450c via the second passage 450B. By the coolant being supplied into the body part interior space, as described above, the movable member front end surface 500A (the movable member front end surface portion 530A) of the movable member 500 abuts on the tool rear end surface 710A. The coolant does not flow into a tool passage since the tool 800 does not have a tool passage. Furthermore, the coolant does not flow from the through hole 540 of the movable member 500 to the cutout parts 830 of the tool 800 since the movable member front end surface 500A abuts on the tool rear end surface 710B.

Therefore, a sufficient amount of coolant is sprayed from the second flow outlet 450c.

In the above-described embodiment, a tool holding mechanism that includes the cutout surfaces defining the cutout parts of the tool, and the rotation stopping members are used, but other known tool holding mechanisms may be used.

For example, as disclosed in Patent Document 1, a tool holding mechanism constituted by a collet that holds the tool outer peripheral surface may be used.

Furthermore, like the body member holding mechanism that holds the body member in the sleeve in the present embodiment, a tool holding mechanism constituted by a pressurizing chamber and an elastically deformable gripping part may be used.

Moreover, a plurality of tool holding mechanisms may be used. For example, a tool holding mechanism constituted by a collet, and a tool holding mechanism constituted by cutout surfaces of the tool and rotation stopping members may be used.

Furthermore, in the present embodiment, the movable member 500 was constituted by three members (510 to 530), but is not limited to this. For example, the movable member 500 can be constituted by one member. Or, the movable member 500 can be constituted by multiple members other than three.

In addition, in the present embodiment, the movable member front end surface 500A was formed by the movable member front end surface portion 530A, the movable member front end surface portion 520A arranged radially inward on the rear end side from the movable member front end surface portion 530A, and the movable member front end surface portion 510A arranged radially outward on the rear end side from the movable member front end surface portion 530A, but is not limited to this. That is, it is sufficient if the movable member front end surface 500A can prevent the coolant from flowing from the opening part 540a of the through hole 540 of the movable member 500 to the cutout parts 730 of the tool 700 in a state in which the movable member front end surface 500A has abutted on the tool rear end surface 710B. For example, the movable member front end surface 500A may be formed by one surface. Or, the movable member front end surface 500A may be formed by multiple movable member front end surface portions other than three. Furthermore, the arrangement position of the movable member front end surface portion that protrudes toward the front end side may be appropriately changed.

The present disclosure is not limited to the above-described embodiments, but rather, may be added to, changed, replaced with alternatives or otherwise modified.

Although a tool holding device has been described in the detailed description above, a tool holder is also disclosed.

The body part of the tool holder is constituted by the body member and the cover, but an integral member also can be used.

The ring member was disposed in the body member interior space, but it may be integrally formed with the body member. Furthermore, the ring member may be omitted.

The ring member front end surface of the ring member is used as the movement restricting surface that restricts the movement of the movable member toward the rear end side, and the body member inner peripheral surface portion is used as the movement restricting surface that restricts the movement of the movable member toward the front end side, but the movement restricting surfaces are not limited to these. Furthermore, the movement restricting surfaces may be omitted.

The support device includes the base, the support member and the sleeve, but is not limited to this.

A variety of configurations of a rotation stopping member may be used as the rotation stopping member(s) that prevent(s) rotation of the tool as long as it is (they are) engageable with the cutout part(s) (including the cutout surface(s)) formed on the tool. Moreover, the number and arrangement position(s) of the rotation stopping member(s) may be appropriately changed.

Each of the features or structures described in the detailed description above may be used individually or in combination of appropriately selected ones.

### DESCRIPTION OF THE NUMERALS

100: tool holding device, 200: support device, 210: base, 211: mounting surface, 212: passage, 220: support member, 220A: support member front end surface, 220B: support member rear end surface, 221: support member inner peripheral surface, 221a to 221c: support member inner peripheral surface portion, 222: mounted surface, 223: recess, 224: through hole, 225: pin, 226: through hole, 230: sleeve, 230A: sleeve front end surface, 230B: sleeve rear end surface, 231: sleeve inner peripheral surface, 232: sleeve outer peripheral surface, 232a to 232e: sleeve inner peripheral surface portion, 233a, 233b: pressurizing chamber, 233c: communication passage, 234a, 234b: gripping part, 235, 236: through hole, 240: cover, 240A: cover front end surface, 240a: cover interior space, 241: cover inner peripheral surface, 300: tool holder, 400: body member, 400A: body member front end surface, 400B: body member rear end surface, 400a: body member interior space, 400b, 400c: body member interior space portion, 401: body member inner peripheral surface, 401A: recess, 401a to 401g: body member inner peripheral surface portion, 402: body member outer peripheral surface, 402a to 402c: body member outer peripheral surface portion, 410: flange, 420: through hole, 421: pin, 422: O-ring, 430: groove, 440: through hole, 441: pin, 450: passage, 450A: first passage, 450B: second passage, 450a: flow inlet, 450b: first flow outlet, 450c: second flow outlet, 460: pin (switching member), 461: hole, 500: movable member, 500A: movable member front end surface, 500B: movable member rear end surface, 510: first member, 510A: front end surface, 510B: rear end surface, 511: inner peripheral surface, 511a to 511g: inner peripheral surface portion, 512: outer peripheral surface, 512a to 512c: outer peripheral surface portion, 513: groove, 514: O-ring, 520: second member, 520A: front end surface, 520B: rear end surface, 521: inner peripheral surface, 522: outer peripheral surface, 522a to 522c: outer peripheral surface portion, 530: third member, 530A: front end surface, 530B: rear end surface, 531: inner peripheral surface, 532: outer peripheral surface, 532a to 532e: outer peripheral surface portion, 540: through hole, 540a, 540b: opening part, 600: ring member, 600A: ring member front end surface, 600B: ring member rear end surface, 600a: through hole, 700, 800: tool, 710, 810: tool body member, 710B, 810B: tool rear end surface, 712, 812: tool outer peripheral surface, 720, 820: cutting edge, 730: cutout part, 730b: opening part, 731, 831: cutout surface, 740, 840: tool passage, 740a: injection port, 740b: opening part

## Claims

1. A tool holder that holds a tool, the tool having at least one cutout part and a tool passage, the cutout part being defined by a cutout surface that was formed by cutting out a tool outer peripheral surface and having an opening part at a tool rear end surface, the tool passage having an opening part at a region of the tool end rear surface that is closer to a tool center line than the opening part of the cutout part, wherein:
the tool holder comprises a body part, a tool holding mechanism and a movable member,
the body part has a body part inner peripheral surface, a body part front end surface, a body part interior space defined by the body part inner peripheral surface, a flow inlet and a first passage that connects the flow inlet with the body part interior space, the body part interior space extending in an axial direction and having an opening part at a front end side in which the tool is insertable,
the tool holding mechanism is configured to detachably hold the tool that has been inserted into the body part interior space,
the movable member has a movable member front end surface, a movable member rear end surface, a movable member outer peripheral surface, and a through hole formed between the movable member front end surface and the movable member rear end surface, and is disposed in the body part interior space so as to be movable along the body part inner peripheral surface in a state in which a gap between the movable member outer peripheral surface and the body member inner peripheral surface is sealed, and
it is configured such that, by supplying a coolant from the flow inlet into the body part interior space via the first passage, the movable member moves toward a front end side along the body part inner peripheral surface, and the movable member front end surface abuts on the tool rear end surface in a state in which the tool passage of the tool, which has been inserted into the body part interior space, and the through hole of the movable member face each other.

2. The tool holder according to claim 1, wherein:
the movable member front end surface has a movable member front end surface portion that protrudes toward the front end side in a region around the through hole, and
it is configured such that the movable member front end surface portion abuts on the tool rear end surface.

3. The tool holder according to claim 2, wherein the movable member front end surface portion is formed of an elastic body.

4. The tool holder according to any one of claims 1 to 3, comprising a movement restricting surface that restricts movement of the movable member toward the rear end side in the body part interior space.

5. The tool holder according to any one of claims 1 to 4, wherein:
the body part has a flow outlet formed in the body part front end surface, and a second passage that connects the flow inlet with the flow outlet,
further comprising a switching member that switches the second passage to an open state or a closed state, and
it is configured such that a supply of coolant from the flow inlet to the flow outlet is allowed when the second passage is switched to the open state, and the supply of coolant from the flow inlet to the flow outlet is inhibited when the second passage is switched to the closed state.

6. The tool holder according to any one of claims 1 to 5, wherein:
the tool holding mechanism has at least one hole that is formed in the body part, opens at the body part inner peripheral surface and extends in a radial direction, and at least one rotation stopping member that is disposed within the hole, is movable along the extending direction of the hole and is abuttable on the cutout surface of the tool that is inserted in the body part interior space.

7. A tool holding device, comprising a tool holder that holds a tool, and a support device that supports the tool holder, wherein the tool holder according to any one of claims 1 to 6 is used as the tool holder.
